Europäisches Patentamt

European Patent Office

Office européen des brevets

(19)

(11) Publication number: **0 036 305**
**B1**

(12) **EUROPEAN PATENT SPECIFICATION**

(45) Date of publication of patent specification: **24.08.83**

(51) Int. Cl.³: **B 29 F 1/12**

(21) Application number: **81301052.7**

(22) Date of filing: **12.03.81**

(54) Method of moulding articles from at least two distinct thermoplastic materials.

(30) Priority: **15.03.80 GB 8008845**
**04.07.80 GB 8021927**

(43) Date of publication of application:
**23.09.81 Bulletin 81/38**

(45) Publication of the grant of the patent:
**24.08.83 Bulletin 83/34** .

(84) Designated Contracting States:
**DE FR GB IT**

(56) References cited:
**FR - A - 2 172 127**
**FR - A - 2 403 180**
**NL - A - 6 701 653**

(73) Proprietor: **Britax Vega Limited**
**Berry Hill Industrial Estate George Baylis Road**
**Droitwich Worcestershire WR9 9AZ (GB)**

(72) Inventor: **Mcbride, Joseph Ivor**
**15 St. Kenelms Road**
**Romsley West Midlands B62 0NU (GB)**

(74) Representative: **Hollinghurst, Antony**
**Britax Central Services 40 Granby Avenue**
**Garretts Green Birmingham, B33 0SJ (GB)**

Courier Press, Leamington Spa, England

# Method of moulding articles from at least two distinct thermoplastic materials

This invention relates to a method of moulding articles of which the various parts are formed from at least two thermoplastic materials differing from one another by at least one property, such as colour.

One known method of moulding such articles is to use a multistation injection moulding machine in which a first set of identical mould halves is mounted on a turntable and a second set of mould halves is mounted with such mould halves disposed at respective stations confronting the first set. Each mould half of the second set is shaped to co-operate with a mould half of the first set to form a mould for a respective stage of the moulding operation. Between the performance of each such stage, the turntable rotates so that each mould half of the first set is offered in turn to each mould half of the second set, the articles remaining in the mould halves of the first set between successive stages.

It is already known to mould a first part of an article, which is to be formed from a first material, at the first station on a moulding machine of the foregoing type and to mould other parts, to be formed from at least two other materials, at a second station at which the already moulded first part serves to separate the two other materials, from one another. It has been proposed, e.g. in GB—A—2004494, that, where zones of the second and third materials are required to abut one another, separation between such zones can be achieved by moulding a tongue of the first material so that it extends across the junction between such two zones, the tongue carrying a rib which projects between the two zones. At the second station, the rib engages with the mould half of the second set to form a barrier between the two zones. If the second and third material in these zones is to be covered by a layer of the first material, the tongue preferably forms part of such layer. Otherwise, the tongue may merely overlie the boundary region between the two zones.

When using the foregoing method, it has been found that if, during injection at the second station, the advancing pressured front of one of the second or third materials reaches the rib before the other, such material tends to leak over the top of the rib. In addition, air can be trapped between the various advancing fronts. The present invention aims to overcome these problems but is also of more general application.

According to the invention, in a method of moulding an article of which the various parts are formed from at least two thermoplastics materials differing from one another by at least one property, wherein a first molten thermoplastic material is injected into a first mould assembly comprising first and second mould halves for forming a first element of the article, and a second molten thermoplastic material is injected into a second mould assembly, of which only the second mould half is different from that of the first mould assembly, for forming a second element of the article, the first element including a web in abutment with the first mould half and carrying a projection adapted to engage with the surface of the second mould half of the second mould assembly to bound a mould cavity for the second material with the web underlying at least part of said cavity, the web further carrying a check rib extending parallel to and spaced from the projection and being dimensioned so as to leave a clearance between such rib and the surface of the second mould half of the second mould assembly.

The web carrying the projection may be part of a skin forming one surface of the article with respective zones of materials differing from one another forming the opposite surface of the article.

When the invention is applied to multistation moulding machines of the type mentioned above, two first mould halves are mounted on the moulding machine turntable and two second mould halves are mounted at two angularly offset stations confronting the first mould halves. The turntable is rotated between each moulding operation to bring each first mould half successively into alignment with the second mould half of the first assembly and the second mould half of the second assembly.

An embodiment of the invention will now be described, by way of example, with reference to the accompanying drawings, in which:

Figure 1 is a plan view of part of a rear light cluster for a motor vehicle,

Figure 2 is a plan view showing the disposition of the mould halves on a turntable of a two-station moulding machine,

Figure 3 is a cross-section on the line AA in Figure 1 after completion of the moulding operation at the first station,

Figure 4 is a cross-sectional view of the line AA during the moulding operation at the second station and,

Figure 5 is a cross-sectional view of the line AA of the completed article.

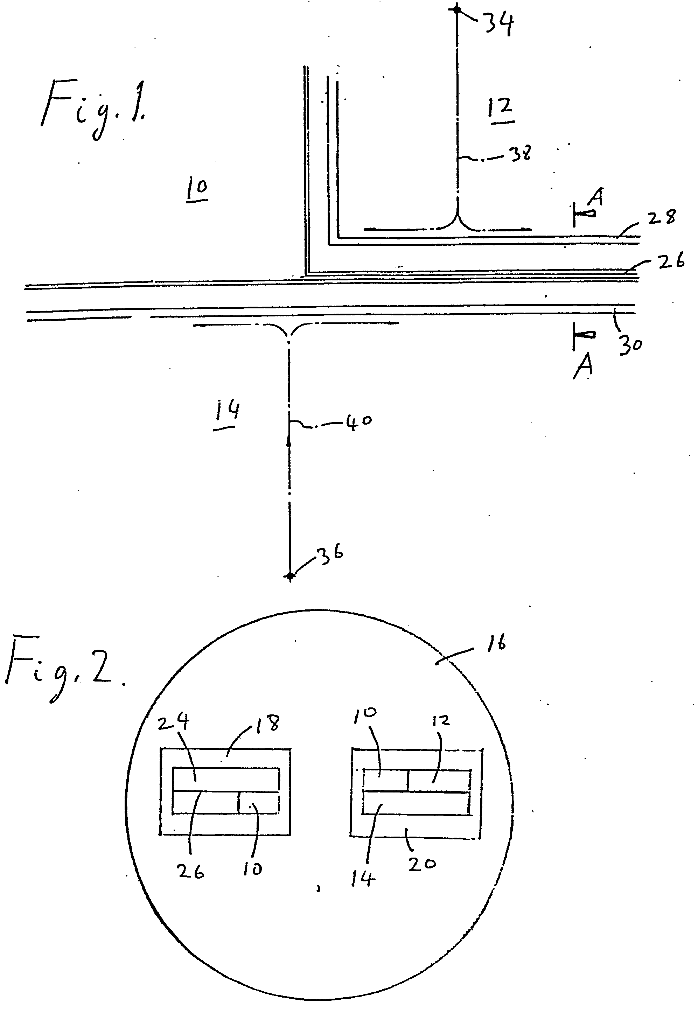

Referring to Figure 1, a lens for a motor vehicle rear lamp, has a clear zone 10 for a reversing light, an amber zone 12 for a direction indicator and a red zone 14 for the remaining lights and the reflector. The lens is moulded with a skin of clear plastics material which extends over the whole lens. There is clear plastics material for the full thickness of the lens in zone 10 and clear material overlaid with amber and red material in zones 12 and 14 respectively.

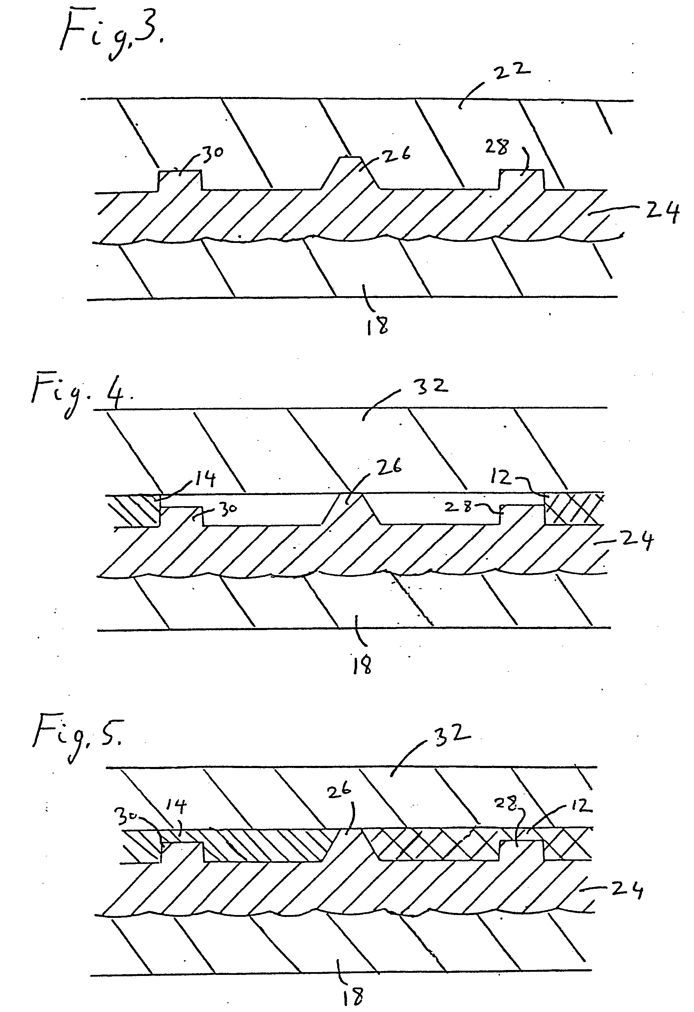

Figure 2 shows the turntable 16 of a two-station injection moulding machine having two identical mould halves 18 and 20 mounted thereon at intervals of 180°. When the mould half 18 is in the position shown in Figure 2, it co-operates with a mould half 22 (Figure 3) above the turntable 16 to define a cavity for moulding a part of the article which is to be in clear plastic, namely the zone 10 for the reversing light (Figure 1) and a skin 24 extending over the entire area of the lens. As shown in Figure 3, a separation rib 26 is formed on the skin 24 to define the boundary between the zones 12 and 14. Check ribs 28 and 30, of half the height of the separation rib 26, are formed on each side thereof.

After completion of the first stage of the moulding, the turntable 16 is rotated through 180° to bring the mould half 18 into the station previously occupied by the mould half 20 and vice versa. The mould half 18 now co-operates with a mould half 32 (Figure 4) while the mould half 20 co-operates with the mould half 22. Next, amber plastics material is injected into the zone 12 through a feed point 34 and red plastics material is injected into zone 14 through a feed point 36 as shown in Figure 1. The flows of injected plastics material from the two feed points 34 and 36 are deflected when they reach the respective check ribs 28 and 30, as shown by chain-dotted lines 38 and 40 respectively, so that the parts of the zones 12 and 14 on the opposite side of the check ribs 28 and 30 from the separation rib 26, are filled with plastics material before any significant quantity flows over the check ribs 28 and 30, as shown in Figure 4. In the final moments of injection, plastics material flows over these check ribs 28 and 30 so as to completely fill the zones 12 and 14, as shown in Figure 5. At the same time, the skin 24 and zone 10 of a second lens is formed in the mould halves 20 and 22.

Thus the invention has the result of ensuring that the red and amber plastics material reach the separation rib 26 as a uniform front and at a reduced pressure, with reduced material dwell against the rib 26 at high temperature. Any leakage of one colour into the zone of the other is limited to the strip bounded by the check ribs 28 and 30. The invention has the further advantage that an air path adjacent to each side of the separation rib 26 remains clear until the injection is almost complete, thereby minimising the risk of air being trapped in the moulding.

Preferably, the check ribs 28 and 30 extend beyond the separation rib 26 along the edges of the clear zone 10. This reduces the possibility of coloured flash extending into the zone 10.

If desired, more than one check rib may be provided on each side of the separation rib 26 and/or along the edges of the clear zone 10. This has the effect of reducing the pressure of the advancing material in stages.

## Claims

1. A method of moulding an article of which the various parts are formed from at least two thermoplastics materials differing from one another by at least one property, wherein a first molten thermoplastic material is injected into a first mould assembly comprising a first mould half (18, 20) and a second mould half (22) for forming a first element (10, 24) of the article, and a second molten thermoplastic material is injected into a second mould assembly, of which only the second mould half (32) is different from that of the first mould assembly, for forming a second element (12, 14) of the article, the first element including a web (24) in abutment with the first mould half (18, 20) and carrying a projection (26) adapted to engage with the surface of the second mould half (32) of the second mould assembly to bound a mould cavity for the second material with the web (24) underlying at least part of said cavity, characterised by a check rib (28, 30) carried by the web (24) and extending parallel to and spaced from the projection (26), the check rib (28, 30) being dimensioned so as to leave a clearance between such rib (28, 30) and the surface of the second mould half (32) of the second mould half assembly.

2. A method according to claim 1, characterised in that the web (24) carrying the projection (26) is part of a skin forming one surface of the article with respective zones (10, 12, 14) of materials differing from one another forming the opposite surface of the article.

3. A method according to claim 1 or 2, characterised in that the projection (26) comprises the edge of a zone (10) in which the first element occupies the complete thickness of the space between the first and second mould halves (18, 20 and 32) of the second mould assembly.

4. A method according to claim 1 or 2, characterised in that the projection (26) comprises a separation rib extending between a zone (12) in which the surface defined by the second mould half (32) of the second mould assembly is formed by the second material and a zone (14) in which said surface is formed by a third thermoplastic material differing from the first and second materials.

5. A method according to claim 4, characterised in that a second check rib (30) is provided on the opposite side of the separation rib from the first check rib (28).

6. A method according to any preceding claim, characterised in that a further check rib is provided between the projection (26) and the first check rib (28, 30).

7. A method according to any preceding claim, characterised in that the first mould half (18, 20) of the first mould assembly also serves as the first mould half of the second mould assembly, the first element (10, 14) remaining in the first mould half (18, 20) until completion of the moulding operation in the second mould assembly.

8. A method according to claim 7, wherein two first mould halves (18 and 20) are mounted on a moulding machine turntable (16) and two second mould halves (22, 32) are mounted at two angularly offset stations confronting the first mould halves (18, 20), the turntable (16) being located between each moulding operation to bring each first mould half (18, 20) successively into alignment with the second mould half (22) of the first assembly and the second mould half (32) of the second assembly.

## Patentansprüche

1. Verfahren zum Spritzgießen eines Werkstückes, dessen verschiedene Teile aus mindestens zwei thermoplastischen Werkstoffen geformt werden, die sich in mindestens einer Eigenschaft unterscheiden, wobei ein erster geschmolzener thermoplastischer Werkstoff in einen ersten Formsatz mit einer ersten Formhälfte (18, 20) und einer zweiten Formhälfte (22) zum Formen eines ersten Elementes (10, 24) des Werkstücks gespritzt wird und ein zweiter geschmolzener thermoplastischer Werkstoff in einen zweiten Formsatz, von welchem nur die zweite Formhälfte (32) von der des ersten Formsatzes verschieden ist, zum Formen eines zweiten Elementes (12, 14) des Werkstücks gespritzt wird, und wobei das erste Element eine an der ersten Formhälfte (18, 20) anliegende Schicht (24) aufweist, die einen Vorsprung (26) trägt, der zur Anlage an der Oberfläche der zweiten Formhälfte (32) des zweiten Formsatzes zur Begrenzung eines Formhohlraumes für den zweiten Werkstoff bestimmt ist, wobei die Schicht (24) sich unter mindestens einem Teil des Hohlraums erstreckt, gekennzeichnet durch eine von der schicht (24) getragene Staurippe (28, 30), die sich im Abstand parallel zu dem Vorsprung (26) erstreckt und so bemessen ist, daß ein Spalt zwischen dieser Rippe (28, 30) und der Oberfläche der zweiten Formhälfte (32) des zweiten Formsatzes verbleibt.

2. Verfahren nach Anspruch 1, dadurch gekennzeichnet, daß die den Vorspring (26) tragende Schicht (24) Teil eines Überzuges ist, der eine Oberfläche des Werkstücks bildet, während Bereiche (10, 12, 14) aus voneinander verschiedenen Werkstoffen die gegenüberliegende Oberfläche des Werkstücks bilden.

3. Verfahren nach Anspruch 1 oder 2, dadurch gekennzeichnet, daß der Vorsprung (26) die Kante eines Bereiches (10) bildet, in welchem das erste Element die gesamte Dicke des Raumes zwischen der ersten und zweiten Formhälfte (18, 20 und 32) des zweiten Formsatzes einnimmt.

4. Verfahren nach Anspruch 1 oder 2, dadurch gekennzeichnet, daß der Vorsprung (26) eine Trennrippe bildet, die sich zwischen einem Bereich (12), in welchem die von der zweiten Formhälfte (32) des zweiten Formensatzes definierte Oberfläche aus dem zweiten Werkstoff geformt wird, und einem Bereich (14), in welchem diese Oberfläche aus einem von dem ersten und zweiten Werkstoff verschiedenen dritten thermoplastischen Werkstoff geformt wird, erstreckt.

5. Verfahren nach Anspruch 4, dadurch gekennzeichnet, daß eine zweite Staurippe (30) auf der der ersten Staurippe (28) entgegengesetzten Seite der Trennrippe vorgesehen ist.

6. Verfahren nach einem der vorstehenden Ansprüche, dadurch gekennzeichnet, daß eine weitere Staurippe zwischen dem Vorsprung (26) und der ersten Staurippe (28, 30) vorgesehen ist.

7. Verfahren nach einem der vorstehenden Ansprüche, dadurch gekennzeichnet, daß die erste Formhälfte (18, 20) des ersten Formsatzes auch als erste Formhälfte des zweiten Formsatzes dient, wobei das erste Element (10, 14) in der ersten Formhälfte (18, 20) bis zur Vollendung des Spritzgießvorgangs in dem zweiten Formsatz verbleibt.

8. Verfahren nach Anspruch 7, wobei zwei erste Formhälften (18 und 20) auf dem Drehtisch (16) einer Spritzgußmaschine montiert sind und zwei zweite Formhälften (22, 32) an zwei im Winkel zueinander versetzten Stationen gegenüber den ersten Formhälften (18, 20) montiert sind und der Drehtisch (16) zwischen jedem Spritzgießvorgang so eingestellt wird, daß jede erste Formhälfte (18, 20) nacheinander mit der zweiten Formhälfte (22) des ersten Formsatzes und der zweiten Formhälfte (32) des zweiten Formsatzes ausgerichtet wird.

## Revendications

1. Procédé de moulage d'article dont les diverses parties sont façonnées à partir d'au moins deux matières thermoplastiques différant l'une de l'autre par au moins une propriété, suivant lequel on injecte une première matière thermoplastique en fusion dans un premier ensemble de moule comportant une première et une seconde moitiés de moule (18, 20) pour former un premier élément (10, 24) de l'article, et on injecte une seconde matière thermoplastique en fusion dans un second ensemble de moule, dont seule la seconde moitié (32) diffère de celle du premier ensemble de moule, pour former un second élément de l'article (12, 14) le premier élément comportant une membrure (24) en appui contre le première moitié de moule (18, 20) et portant une saillie (26) agencée pour porter contre la surface de la seonde moitié de moule (32) du second ensemble de moule afin de délimiter une cavité de moule pour la seconde matière, avec la membrure (24) qui se trouve au-dessous d'une partie au moins de ladite cavité, caractérisé par une nervure d'arrêt (28, 30) portée par la membrure (24) et qui s'étend parallèlement à la saillie (26) et en est espacée, la nervure d'arrêt (28, 30) étant dimensionée pour laisser un interstice entre cette nervure et la surface de la seconde moitié de moule (32) du second ensemble de moule.

2. Procédé selon la revendication 1, caractérisé en ce que la membrure (24) portant la saillie (26) fait partie d'une peau formant une surface de l'article, des zones respectives (10, 12, 14) en matières différant l'une de l'autre formant la surface opposée de l'article.

3. Procédé selon la revendication 1 ou 2, caractérisé en ce que la saillie (26) constitue le bord d'une zone (10) dans laquelle le premier élément occupe toute l'épaisseur du volume séparant les première et seconde pièces de moule (18, 20 et 32) du second ensemble de moule.

4. Procédé selon la revendication 1 ou 2, caractérisé en ce que la saillie (26) comprend une nervure de séparation s'étendant entre une zone (12) dans laquelle la surface définie par la seconde moitié de moule (32) du second ensemble de moule est formée par la seconde matière et une zone (14) dans laquelle ladite surface est formée par une troisième matière thermoplastique différant des première et seconde matières.

5. Procédé selon la revendication 4, caractérisé en ce qu'une seconde nervure d'arrêt (30) est prévue sur le côté de la nervure de séparation opposé à la première nervure d'arrêt (28).

6. Procédé selon l'une quelconque des revendications précédentes, caractérisé en ce qu'une nervure d'arrêt supplémentaire est prévue entre la saillie (26) et la première nervure d'arrêt (28, 30).

7. Procédé selon l'une quelconque des revendications précédentes, caractérisé en ce que la première moitié de moule (18, 20) du premier ensemble de moule sert aussi de première moitié de moule du second ensemble de moule, le premier élément (10, 14) demeurant dans la première moitié de moule (18, 20) jusqu'à l'achèvement de l'opération de moulage effectuée dans le second ensemble de moule.

8. Procédé selon la revendication 7, caractérisé en ce que les deux premières moitiés de moule (18 et 20) sont montées sur une table tournante de machine à mouler (16) et les deux secondes moitiés de moule (22, 32) sont montées en deux postes angulairement décalés faisant face aux premières moitiés de moule (18, 20), la table tournante (16) étant placée entre chaque opération de moulage pour amener successivement chaque première moitié de moule (18, 20) en alignemént avec la seconde moitié de moule (22) du premier ensemble et avec la seconde moitié de moule (32) du second ensemble.

Fig. 1.

10

12

34

38

A

28

26

A

30

14

40

36

Fig. 2.

16

24

18

10

12

26

10

14

20

1

Fig. 3.

Fig. 4.

Fig. 5.